# EUROPÄISCHE PATENTANMELDUNG

(11) **EP 2 532 809 A2**
(43) Veröffentlichungstag der Anmeldung: **12.12.2012**
(21) Anmeldenummer: 12171082.6
(22) Anmeldetag: 06.06.2012
(51) Int. Cl.: E04H 12/24

(54) **Traversenanordnung, insbesondere für Freileitungsmaste**

(30) Priorität: 08.06.2011 DE 102011106077; 08.02.2012 DE 102012101002
(71) Anmelder: INDUO Gesellschaft zur Verwertung von Schutzrechten mbH & Co. KG, 41352 Korschenbroich (DE)
(72) Erfinder: Reichartz, Paul, 41352 Korschenbroich (DE)
(74) Vertreter: Lenzing Gerber Stute

(57) **Zusammenfassung**

Die Erfindung betrifft eine Traverse sowie eine Traversenanordnung für einen Mast, insbesondere einen Freileitungsmast, mit mindestens einer Traverse und mindestens einer Stütze zu ihrer Befestigung. Um eine günstigere Übertragung von Lasten in die Traverse oder von der Traverse in die Stütze und damit in den Mast zu ermöglichen, wird vorgeschlagen, die Traverse aus Holz oder einem Holzwerkstoff auszuführen und in die Traverse mindestens einen Verbundanker zur Befestigung von Stützen, Trägern, Isolatoren oder dergleichen einzulassen. Darüber hinaus wird vorgeschlagen, aus Vogelschutzgründen Isolationsmittel vorzusehen, mit denen die Stütze gegenüber dem Mast und/oder der Traverse elektrisch isoliert ist.

## Beschreibung

Die Erfindung betrifft eine Traversenanordnung für einen Mast, insbesondere einen Freileitungsmast, mit mindestens einer Traverse und mindestens einer Stütze zu ihrer Befestigung.

Maste für Freileitungen sind bekannt. Sie werden sowohl in Niederspannungsnetzen, in Mittelspannungsnetzen als auch in Hochspannungsnetzen verwendet. In Niederspannungsnetzen und Mittelspannungsnetzen werden als Maste regelmäßig Holzmaste verwendet. Die Freileitungen sind an Isolatoren gelagert, die in aller Regel stehend oder hängend an Traversen der Maste befestigt sind. Die verwendete Mastkonstruktion hängt insbesondere von der für den Mast bestehenden Lastsituation ab. Es kommen beispielsweise Einzelmaste, Doppelmaste, A-Maste oder H-Maste zum Einsatz. Als Traversen kommen überwiegend solche aus Stahl zum Einsatz. Insbesondere werden H-Träger und Rechteck-Hohlprofile aus Stahl für die Traversenkonstruktion verwendet. Die Traversen werden über gebogene Flachstähle als Stützen mit der Mastkonstruktion verbunden. Hierfür sind außen an der Traverse Flansche angeschweißt, an denen die Flachstähle angeschraubt werden. Die Schweißnähte oder Schweißpunkte zum Verschweißen der Flansche haben daher alle statischen Lasten, die über die Traverse auf den Mast wirken, zu übertragen und sind daher stark belastet. Um die Traverse oberhalb des Mastes positionieren zu können, weisen die Flansche Langlöcher in Längsrichtung der Traverse auf. Diese Art der Konstruktion wird aus statischer Sicht als nicht sehr befriedigend angesehen, da die durch die Langlöcher greifenden Schrauben beispielsweise bei auftretenden Windlasten dynamisch in ihrer Längsrichtung auf Zug beansprucht werden können, was unter Umständen zu einer Lockerung der Schraubverbindung führen kann.

Eine Aufgabe der vorliegenden Erfindung besteht darin, eine andere Traversenanordnung zur Verfügung zu stellen, mit der eine günstigere Übertragung der Lasten von Mastelementen in die Traverse oder von der Traverse in die Stützen und damit in den Mast zur Verfügung gestellt wird.

Diese Aufgabe wird erfindungsgemäß dadurch gelöst, dass die Traverse aus Holz oder einem Holzwerkstoff besteht, und dass zur Befestigung der Mastelemente wie Stützen, Trägern, Isolatoren oder dergleichen in die Traverse mindestens ein Verbundanker eingelassen ist.

Unter Holz oder einem Holzwerkstoff wird jeder Holz enthaltende Werkstoff einschließlich Holzverbundwerkstoff verstanden, der die notwendigen Festigkeitseigenschaften aufweist, um die auf die Traverse wirkenden statischen und dynamischen Lasten sicher aufnehmen zu können. Neben Holz kommen als besonders feste Holzwerkstoffe insbesondere Furnierschichtholz (u.a. von Kerto^{Ⓡ}), Brettschichtholz und WPC (wood plastic composites) in Betracht. Letztere sind aufgrund Ihrer guten Festigkeitseigenschaften besonders bevorzugt.

Unter einem Verbundanker wird hier und im Folgenden ein Bauelement verstanden, das in die Traverse als Anker eingelassen ist und zur Verbindung mit einer Stütze verwendet werden kann. Hierunter wird insbesondere ein Anker mit einem Ankerkern und daran angeordneten Ankerstiften verstanden. Der Kern kann eine symmetrische oder asymmetrische Form haben. Als praktisch relevante Kernformen haben sich längliche Kerne mit einem quadratischen oder rautenförmigen Querschnitt herausgestellt. Es sind aber auch als Polyeder ausgebildete Kerne oder andere symmetrisch oder asymmetrisch ausgebildete Kerne verwendbar. Die Ankerstifte können sich nur zu einer Seite hin oder an gegenüberliegenden Seiten des Kerns in entgegengesetzte Richtungen erstrecken. Die Ankerstifte können einen runden oder mehreckigen Querschnitt aufweisen, und insbesondere als Dornen ausgebildet sein. Mit den Ankerstiften kann der Anker optimal die auf die Traverse wirkenden Kräfte aufnehmen und über den Ankerkern in die Stütze überleiten. Die Verbundanker können grundsätzlich mehrstückig aus einem oder verschiedenen Werkstoffen ausgebildet sein, sind aber vorzugsweise einstückig aus einem Gussmaterial, insbesondere aus Grauguss. Die Anker können je nach Bedarf mit einer oder mehreren Durchgangsbohrungen längs oder quer durch ihren Kern ausgeführt sein und als sogenannte Durchsteckanker als Lager für Gewindestifte dienen. Sie können auch Gewindebohrungen für am Anker zu befestigende Schrauben aufweisen. Alternativ, aber weniger bevorzugt kommen als Anker auch Gewindestangen in Betracht, die in Bohrungen in einer Traverse eingelassen und darin verleimt sind. Eine andere aber ebenso weniger bevorzugte Alternative besteht in einem Anker mit einem Ankerkörper ohne Ankerstifte, beispielsweise in Form eines Quaders, der mit einer Bohrung/Durchgangsbohrung bzw. einer Gewindebohrung versehen und vollständig in die Traverse eingelassen ist.

Die Verwendung eines Holzwerkstoffs für die Traverse hat zum einen den Vorteil, dass ohne großen Aufwand ein Anker als Verbindungselement in die Traverse eingebracht werden kann. Ein innerhalb der Traverse angeordneter Anker hat den Vorteil, dass die Kraftüberleitung aus dem Inneren der Traverse in die Stütze eingeleitet werden kann. Damit sind die statischen Eigenschaften der Verbindung verbessert gegenüber einem Einbringen der Lasten über die Außenseite der Traverse, die bei Holzwerkstoffen aufgrund von Feuchteeinflüssen ständig quillt und schwindet.

Darüber hinaus besteht bei Verwendung von Traversen aus Holzwerkstoffen der Vorteil, dass sie in absehbarer Zeit sowohl hinsichtlich der benötigten Rohstoffe als auch hinsichtlich der Herstellung günstiger sind als vergleichbare Traversen aus Stahl.

Da die statischen Lasten im Wesentlichen vertikal wirken, sind die überwiegend länglich ausgestalteten Verbundanker vorzugsweise im Wesentlichen vertikal angeordnet. Sie können aber auch horizontal oder gegebenenfalls sogar schräg in der Traverse angeordnet sein, je nachdem, welches Mastelement über den jeweiligen Verbundanker mit der Traverse verbunden werden soll.

Vorzugsweise weist der Verbundanker mindestens zwei von außerhalb der Traverse über entsprechende Ausnehmungen zugängliche Durchgangs- und/oder Gewindebohrungen auf, die einen Anschluss von Mastelementen in verschiedenen Positionen ermöglichen. In diesem Zusammenhang ist es darüber hinaus bevorzugt, wenn die Achsen mindestens zweier Durchgangs- und/oder Gewindebohrungen eine unterschiedliche Richtung aufweisen, beispielsweise horizontal und vertikal verlaufen. Dadurch wird es möglich, eine Traverse für eine Vielzahl von unterschiedlichen Mastkonstruktionen zu verwenden. So lässt sich die Traverse dann beispielsweise wahlweise über einen Anschluss an ihrer Unterseite oder über seitliche Verbindungen mit verschiedenen Masttypen verbinden.

Insbesondere bei Verwendung von Ankern mit Ankerstiften, aber nicht nur dann, ist es von Vorteil, wenn die Traverse in ihrer Längsrichtung mindestens zweigeteilt ist, wobei mindestens einer der Traversenteile eine Ausnehmung für den Anker aufweist, der Anker in diese mindestens eine Ausnehmung, die der Form des Verbundankers entspricht, eingelegt ist und die Traversenteile fest miteinander verbunden, insbesondere verleimt oder verschraubt, sind. Damit ist der Verbundanker vollständig von der Traverse umschlossen, so dass der gesamte Ankerkörper zur Aufnahme von Kräften aus der Traverse genutzt werden kann. Natürlich ist bei einer solchen Ausführungsform mindestens eine Bohrung vorgesehen, über die die Stütze, beispielsweise mittels einer Gewindestange oder einer Schraube, mit dem Anker verbunden werden kann.

Wie bereits zuvor erwähnt, sind besonders solche Anker bevorzugt, die einen Kern und quer davon abstehende Ankerelemente aufweisen, die insbesondere so ausgestaltet sind, dass sie die auf die Traverse wirkenden Kräfte aufnehmen und über den Anker auf die Stütze übertragen können. Zwar weniger bevorzugt, aber auch möglich ist es, wenn der Verbundanker in seiner Längsrichtung parallel zur Längsachse der Traverse angeordnet ist, sofern der Anker Anschlussmöglichkeiten für ein Verbindungsmittel quer zu seiner Längsachse aufweist. Eine Anordnung des Ankers schräg zur Längsachse der Traverse ist ebenso denkbar.

In einer weiteren bevorzugten Ausgestaltung der Erfindung sind weitere Verbundanker in die Traverse eingelassen, die der Befestigung von Isolatoren für Freileitungen dienen. Auch hier ist eine vertikale Ausrichtung der Anker von Vorteil, und zwar sowohl zum Anschluss von stehenden, als auch von hängenden Isolatoren. Werden hierfür Anker mit einer durchgehenden Gewindebohrung durch den Ankerkern eingesetzt, ist es möglich, an den gleichen Anker je nach Einsatzzweck wahlweise von oben am Anker stehende Isolatoren oder aber von unten am Anker hängende Isolatoren zu befestigen. In diesem Fall wäre der Anker vorzugsweise in einer durchgehenden, vertikalen Ausnehmung in der Traverse eingelegt, so dass der Anker sowohl von oben als auch von unten zugänglich ist. Möchte man aber eine Öffnung an der Oberseite der Traverse vermeiden, beispielsweise um ein Eindringen von Wasser in die Traverse zu verhindern, reicht es aus, wenn der Anker über eine sich vom Anker nach unten erstreckende Ausnehmung in der Traverse zugänglich ist und der Anker lediglich eine von unten zugängliche Gewindebohrung aufweist. Damit kann am Anker nicht nur ein hängender Isolator befestigt werden, sondern auch eine unter der Traverse angeordnete, seitlich über die Traverse überstehende Platte, auf der sich stehende Isolatoren abstützen können.

In einem weiteren Aspekt befasst sich die Erfindung mit dem Problem des Vogelschutzes.

Obwohl die Freileitungen über Isolatoren mit der Traverse verbunden sind, besteht für Vögel die Gefahr, einen Stromschlag zu erleiden, nämlich dann, wenn sie auf der Traverse sitzen und mit einem ihrer Flügel mit einer Freileitung in Berührung kommen, so dass sie den Isolator überbrücken und über den Mast geerdet sind.

Es sind verschiedene Ansätze zur Behebung dieses Problems bekannt. So werden die Freileitungen im Bereich der Traverse von oben abgedeckt, um einen Kontakt von Flügeln mit dem Freileiter zu verhindern. Diese Lösung hat allerdings den Nachteil, dass die Freileitungen im Bereich der Maste optisch nicht von oben bei einem Überflug von Servicepersonal inspiziert werden können. Vielmehr muss ein Servicetechniker zur Überprüfung der Freileitung im Bereich der Traverse den Mast erklimmen. Das ist zeitaufwändig und teuer.

Eine andere Lösung des Problems nutzt die Beobachtung, dass Vögel sich auf dem höchsten Punkt einer Konstruktion niederlassen. Die Lösung besteht darin, oberhalb der Traverse eine Sitzstange für Vögel so anzuordnen, dass in jedem Fall ein ausreichender Abstand zu den Freileitungen besteht. Diese Konstruktionen sind vergleichsweise aufwändig.

Vor diesem Hintergrund liegt der vorliegenden Erfindung auch die Aufgabe zugrunde, einen konstruktiv einfachen Schutz für Vögel vor Stromschlägen zur Verfügung zu stellen. Diese Aufgabe wird bei einer Traversenanordnung der eingangs genannten Art und insbesondere einer solchen gemäß der oben beschriebenen Erfindung, gelöst durch Isolationsmittel, mit denen die Stütze gegenüber dem Mast und/oder der Traverse elektrisch isoliert ist.

Besonders effektiv und kostengünstig wird eine elektrische Isolierung bei Verwendung von Verbundankern zur Traversenbefestigung. In diesem Fall kann die elektrische Isolierung mit einer in den Anker eingesetzten Gewindebuchse aus einem isolierenden Werkstoff, in die eine Schraube zur Befestigung der Traverse an der Stütze eingeschraubt ist, erreicht werden, wobei die Gewindebuchse vorzugsweise soweit aus dem Anker herausstehen und die Traverse abdecken sollte, dass ein leitender Kontakt zwischen Schraube bzw. Gewindebolzen oder Stütze und der Traverse ausgeschlossen ist. Alternativ oder in Ergänzung zur isolierenden Gewindebuchse kann auch eine Schraube aus einem nicht leitenden Werkstoff verwendet werden. In beiden Fällen muss sichergestellt sein, dass das mit dem Verbundanker über die Schraube zu verbindende Gegenlager (beispielsweise ein Flansch an der Stütze), das an der Traverse anliegt, gegenüber dieser isoliert ist, zum Beispiel durch ein nicht leitendes Zwischenstück wie beispielsweise eine Unterlegscheibe. Als isolierender Werkstoff kommt insbesondere ein isolierendes Kunststoffmaterial in Betracht.

Ergänzend oder alternativ zu der elektrischen Isolierung mit einer nicht leitenden Gewindebuchse und/oder einer nicht leitenden Schraube ist vorzugsweise eine an der Unterseite der Traverse befestigte und gegenüber der Traverse elektrisch isolierte Schiene, die eine in ihrer Längsrichtung variable Positionierung der Verschraubung für eine Stütze ermöglicht, vorgesehen. Als geeignete Schiene kommt insbesondere eine sogenannte Halfen^{Ⓡ}- Schiene in Betracht, die so an der Unterseite der Traverse befestigt ist, dass sie sich nach unten öffnet, so dass ein Schraubenkopf darin geführt und in Längsrichtung der Traverse verschoben werden kann, so dass er in unterschiedlichen Positionen mit der Stütze verschraubt werden kann. Eine solche erfindungsgemäße Ausführungsform ist insbesondere dann von Vorteil, wenn die Traverse mit zwei Stützen an einem Mast befestigt werden soll und der Durchmesser des Mastzopfes des jeweils eingesetzten Mastes variiert.

Die erfindungsgemäß verwendete Schiene kann aus einem elektrisch isolierenden Werkstoff bestehen, aber auch bevorzugt in eine Führung aus einem elektrisch isolierenden Werkstoff eingesetzt sein. In einer weiteren bevorzugten Ausgestaltung der Erfindung sitzt die Schiene ggf. samt Führung in einer an der Unterseite der Traverse vorgesehenen Ausnehmung. Dadurch kann ein Wassereintritt zwischen Schiene bzw. Führung und Traverse vermieden werden, so dass eine feuchtebedingte Schädigung der Traverse sicher vermieden werden kann.

Die Isolierung der Stütze gegenüber der Traverse hat den ganz wesentlichen Vorteil, dass die Isolierung in einem statisch nicht beanspruchten Bereich erfolgt.

Alternativ zur vorbeschriebenen erfindungsgemäßen Isolierung der Stütze gegenüber der Traverse kann die Stütze auch gegenüber dem Mast elektrisch isoliert sein, indem beispielsweise die Mittel zum Befestigen der Stütze am Mast aus einem elektrisch nicht leitenden Material bestehen.

Im Folgenden wird die beanspruchte Erfindung anhand von Figuren beispielhaft näher erläutert. Es zeigen
- Fig. 1: eine perspektivische Ansicht einer vorbekannten Stahltraversenanordnung;
- Fig. 2a: eine Seitenansicht einer ersten erfindungsgemäßen Ausführungsform;
- Fig. 2b: eine perspektivische Ansicht der in Fig. 2a dargestellten Ausführungsform mit in Längsrichtung geschnittener Traverse;
- Fig. 2c: eine perspektivische Ansicht einer im Bereich eines Verbundankers quer geschnittenen Traverse der Traversenanordnung aus Fig. 2a;
- Fig. 2d: eine perspektivische Ansicht einer im Bereich eines Verbundankers längs geschnittenen Traverse der Traversenanordnung aus Fig. 2a;
- Fig. 3: eine andere Ausführungsform der erfindungsgemäßen Traversenanordnung.

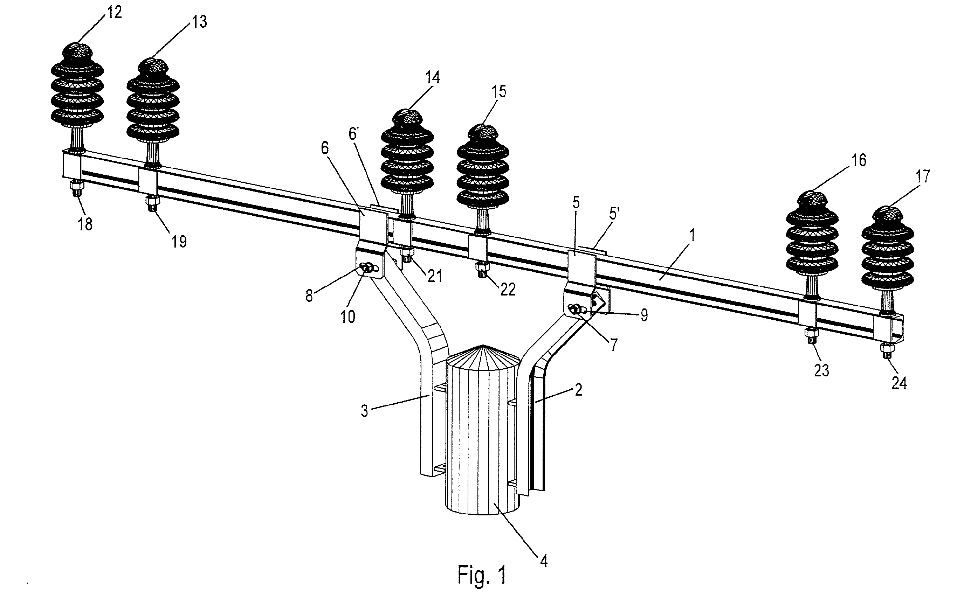

Die in Figur 1 dargestellte herkömmliche Traversenanordnung besteht aus einem Stahlprofil 1, das über abgewinkelte Stützen 2, 3 mit dem Mastzopf eines einzelnen Tragmastes 4 verbunden ist. Die Verbindung der Stützen 2, 3 mit dem Mastzopf kann dabei in bekannter Weise erfolgen, wie beispielsweise in der WO 2007/121881 A1 beschrieben ist. Seitlich der Traverse 1 sind paarweise Flansche 5, 51 und 6, 6' vorgesehen, an deren unteren Enden Langlöcher 7, 8 vorgesehen sind. Jede der Stützen 2, 3 ist jeweils über eine Verschraubung 9, 11, die durch die Stütze 2, 3 und die Langlöcher 7,8 durchgeführt ist, mit der Traverse 1 verbunden. Mit den Langlöchern ist es möglich, die Traverse 1 zentral über dem Mast 4 zu positionieren.

Die Traverse 1 ist darüber hinaus an ihren Enden und in der Mitte mit vertikalen Bohrungen zur Befestigung von Isolatoren 12, 13, 14, 15, 16, 17 versehen, die mit der Traverse 1 über Gewindebolzen 18, 19, 21, 22, 23, 24 verbunden sind.

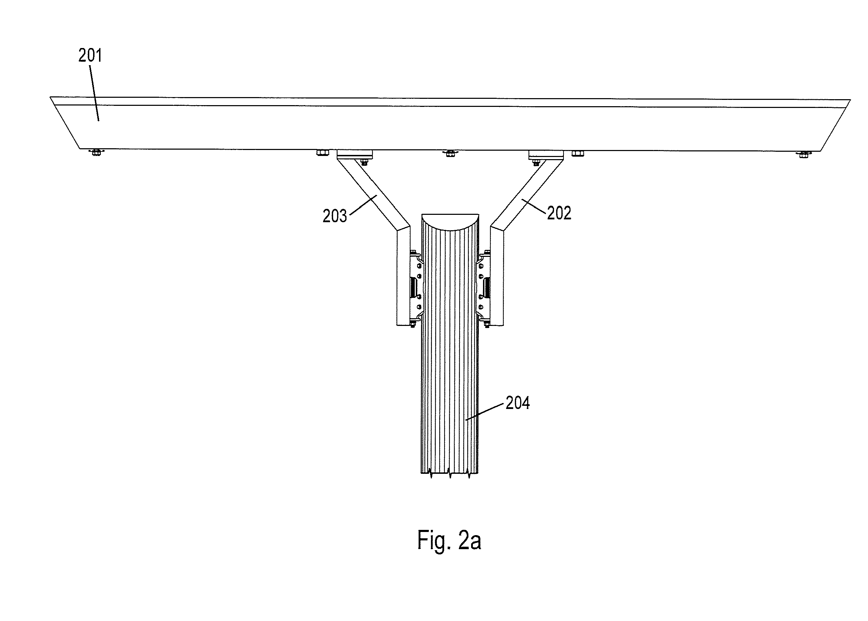

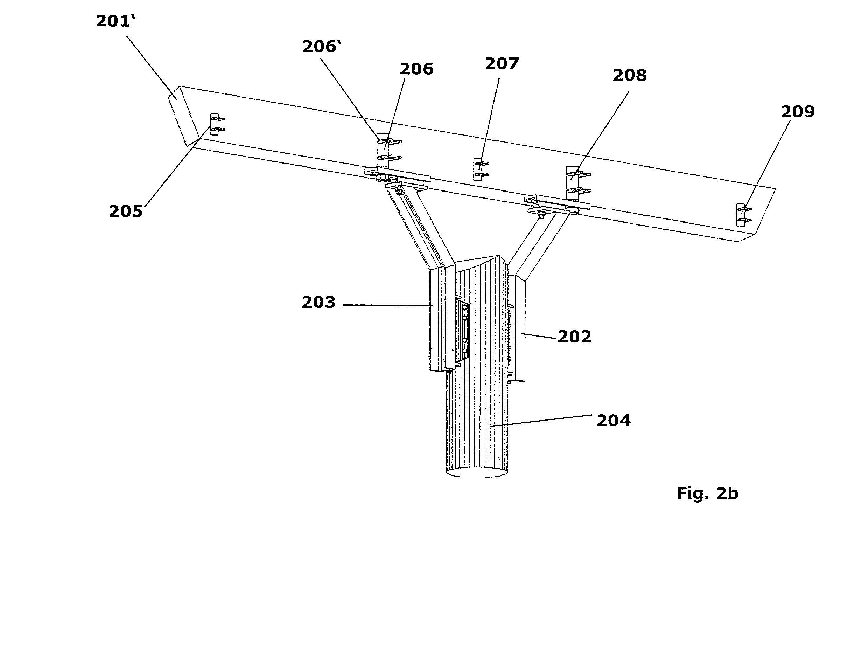

In den Figuren 2a bis 2d ist ein erstes erfindungsgemäßes Beispiel einer Traversenanordnung dargestellt. Sie zeigen eine erfindungsgemäße Traverse 201, die über Stützen 202, 203 in Form abgewinkelter Profilträger mit dem Mastzopf eines Mastes 204 verbunden ist. Die beiden Stützen 202, 203 sind über Verbundanker 205, 206, die von außen in den Mast 204 eingreifen, mit dem Mast 204 verbunden. Die Verbindung entspricht der in der in der WO 2007/121881 A1 beschriebenen Art.

Die Traverse ist zweigeteilt. In die beiden Teile 201`, 201" sind nicht näher dargestellte Ausnehmungen zur Aufnahme von Verbundankern 205 - 209 eingelassen, wobei die Ausnehmungen im Wesentlichen dem Profil der Verbundanker 205 - 209 entsprechen. Zumindest in eine Richtung, vorzugsweise nach unten, oder in beide vertikalen Richtungen wird die Ausnehmung mit einem dem Querschnitt des Ankerkerns des jeweiligen Ankers entsprechenden Querschnitt fortgeführt, damit der in der Traverse eingebettete Anker von unten, von oben, oder von oben und unten zugänglich ist.

Die in der Traverse 201 eingelassenen Verbundanker 205 - 209 weisen einen Ankerkern mit einem im Wesentlichen quadratischen Querschnitt auf, dessen eine Querschnittsdiagonale in der Schnittebene der beiden Traversenteile 201`, 201" liegt. Der Ankerkern der Anker ist je nach Ausführung mit einer in Längsrichtung durchgehenden Bohrung, einer durchgehenden Gewindebohrung oder lediglich mit einer von unten zugänglichen Gewindebohrung versehen. Insbesondere dann, wenn ein Anker nur von einer Seite der Traverse aus zugänglich ist, ist eine Gewindebohrung im Ankerkern notwendig.

Die Anker sind mit Ankerstiften (hier exemplarisch am Anker 206 mit 206' bezeichnet) versehen, die quer zur Längsachse der Traversenteile 201 in diese eingreifen und die Kräfte aus der Traverse in den Ankerkörper übertragen.

Im dargestellten Ausführungsbeispiel sind Verbundanker zweier Größen dargestellt. Die beiden äußeren Verbundanker 205, 209 sowie der mittlere Verbundanker 207 dienen zur Befestigung von hier nicht dargestellten Isolatoren. Insbesondere die beiden äußeren Verbundanker 205, 209 können hierfür mit Durchgangsbohrungen oder durchgehenden Gewindebohrungen im Ankerkern versehen sein, um stehende Isolatoren durch Einschrauben von Gewindebolzen von oben zu befestigen oder entsprechend hängende Isolatoren durch Einschrauben von Gewindebolzen von unten am Ankerkern zu befestigen. Zu beiden Seiten des mittleren Verbundankers 207 sind etwas größere Verbundanker 206, 208 zur Befestigung der Stützen 202, 203 vorgesehen. Es ist deutlich zu sehen, dass alle Verbundanker zu der Unterseite und auch der Oberseite der Traverse 1 beabstandet sind.

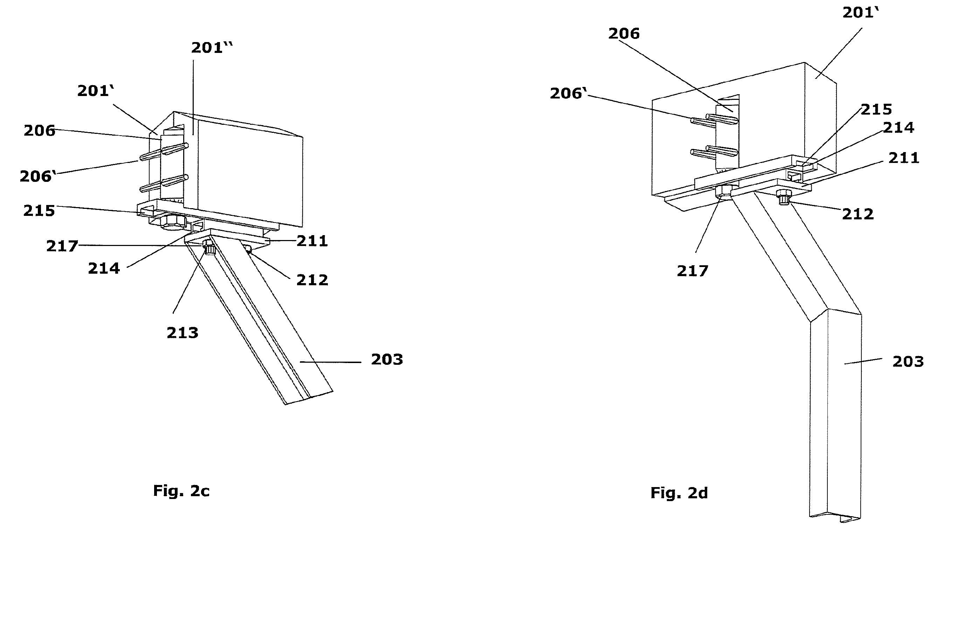

Die Anbindung der Stützen 202, 203 an die Verbundanker ist in den Figuren 2c und 2d exemplarisch für Stütze 203 gezeigt. Die Stütze 203 weist an ihrem oberen Ende einen horizontalen Flansch 211 auf. Der Flansch 211 ist mit zwei in Richtung der Längsachse der Traverse 201 hintereinander angeordnete Bohrungen für Schraubverbindungen 212, 213 versehen. Der Flansch 211 liegt an einer nach unten offenen Halfen^{Ⓡ}-Schiene 214 an, wobei die Schraubenköpfe der Schraubverbindungen in die Halfen^{Ⓡ}-Schiene 214 eingreifen und der Flansch 211 fest mit der Halfen^{Ⓡ}-Schiene 214 verschraubt ist. Die Halfen^{Ⓡ}-Schiene 214 kann mit einer gezahnten Führung versehen sein (Bsp.: Halfenschiene des Typs HZA Dynagrip). Durch die Halfenschienen besteht die Möglichkeit, die Traverse 201 zentral über dem Mast auszurichten.

Die Halfen^{Ⓡ}-Schiene 214 ist mit einem Flachstahl 215 verschweißt, der in Richtung zur nächstliegenden Stirnseite der Traverse 201 über die Halfen^{Ⓡ}-Schiene 214 übersteht und dort mit einer Bohrung versehen ist.

Der Flachstahl 215 sitzt in einem nach unten offenen U-Profil 216 als Führung, der den Flachstahl von drei Seiten ummantelt und vollständig von der Traverse 201 trennt. Das U-Profil 216 ist in eine Ausnehmung in Längsrichtung an der Unterseite der Traverse 201 eingebettet.

Durch die Bohrung im Flachstahl 215 und eine damit fluchtende Bohrung im U-Profil 216 ist eine Schraube 217 eingesteckt, die in den Ankerkern eingreift. Dabei ist die Schraube gegenüber dem Verbundanker insoweit elektrisch isoliert, als eine in den Verbundanker eingesetzte, hier nicht dargestellte Gewindebuchse eingesetzt ist, die aus einem nicht-leitenden Werkstoff, insbesondere einem nicht elektrisch leitenden Kunststoff besteht. Darüber hinaus ist auch das U-Profil 216 aus einem nicht leitenden Werkstoff ausgebildet, so dass die Stütze gegenüber der Traverse vollständig isoliert ist.

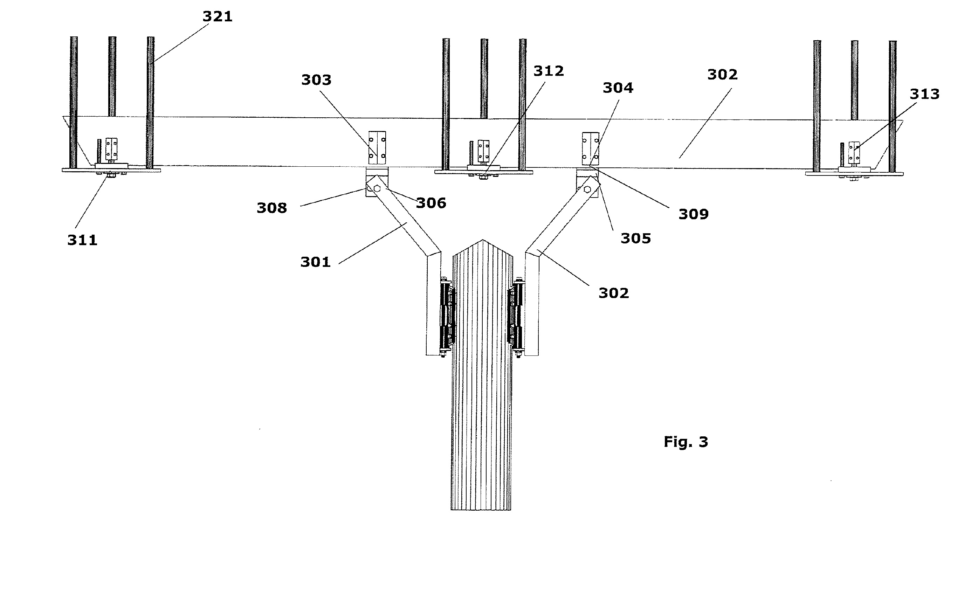

Die in Figur 3 dargestellte Ausführungsform der erfindungsgemäßen Traversenanordnung unterscheidet sich zum einen in der Verbindung der Stützen mit den Verbundankern 304. Anstelle einer aufwändigeren Konstruktion mit Halfenschiene, Flachstahl und U-Profil ist hier an den Ankern 303, 304 jeweils ein L-Profil 305, 306 befestigt, dessen einer Schenkel parallel zur Unterseite der Traverse 30 und dessen anderer Schenkel in einer vertikalen Ebene parallel zur Längsachse der Traverse 307 liegen. Die parallel zur Unterseite der Traverse 307 liegenden Schenkel der L-Profile sind von dieser jeweils durch ein isolierendes Zwischenstück 308, 309 getrennt.

In den vertikalen Schenkeln der L-Profile sind Langlöcher vorgesehen, über die die Stützen 301, 302, die an den vertikalen Schenkeln der L-Profile 305, 306 anliegen, mit diesen verschraubt sind.

An die äußeren Verbundanker 311, 312 und an den mittleren Verbundanker 313 sind horizontale Platten 314 bis 316 befestigt, die gegenüber der Unterseite der Traverse durch Distanzstücke 317 - 319 beabstandet sind. Die Platten dienen der Abstützung von stehenden Isolatoren, die oberhalb der Streben (hier eine exemplarisch mit 321 bezeichnet) mit geeigneten Mitteln (beispielsweise eine durch die Streben gehaltene Platte) gelagert werden. Der Vorteil dieser Befestigung von stehenden Isolatoren besteht darin, dass die Traverse an ihrer Oberseite keine Öffnungen aufweist, durch die Wasser in ihr Inneres eintreten kann.

## Patentansprüche

1. Traverse für einen Mast (204), insbesondere einen Freileitungsmast, **dadurch gekennzeichnet, dass** sie aus Holz oder einem Holzwerkstoff besteht und mindestens ein Verbundanker (205, 206, 207, 208, 209) zur Befestigung von Mastelementen wie Stützen, Trägern, Isolatoren oder dergleichen in die Traverse eingesetzt ist.

2. Traverse nach Anspruch 1, **dadurch gekennzeichnet, dass** mindestens einer der Verbundanker (205, 206, 207, 208, 209) im Wesentlichen vertikal oder im Wesentlichen horizontal angeordnet ist.

3. Traverse nach Anspruch 1 oder 2, **dadurch gekennzeichnet, dass** der Verbundanker (205, 206, 207, 208, 209) mindestens zwei Durchgangs- und/oder Gewindebohrungen aufweist, die einen Anschluss von Mastelementen in verschiedenen Positionen ermöglicht.

4. Traverse nach Anspruch 3, **dadurch gekennzeichnet, dass** die Achsen mindestens zweier Durchgangs- und/oder Gewindebohrungen eine unterschiedliche Richtung aufweisen.

5. Traverse nach einem der vorstehenden Ansprüche, **dadurch gekennzeichnet, dass** der Anker (206) einen Kern und quer davon abstehende Ankerelemente (206') aufweist, die insbesondere so ausgestaltet sind, dass sie die auf die Traverse wirkenden Kräfte aufnehmen und über den Anker auf die Stütze übertragen können.

6. Traverse nach einem der vorstehenden Ansprüche, **dadurch gekennzeichnet, dass** sie in ihrer Längsrichtung mindestens zweigeteilt ist, wobei mindestens einer der Traversenteile (201', 201") eine Ausnehmung für den Anker (205 - 209) aufweist, der Anker (205 - 209) in diese mindestens eine Ausnehmung eingelegt ist und die Traversenteile (201', 201") fest miteinander verbunden, insbesondere verleimt oder verschraubt, sind.

7. Traversenanordnung für einen Mast, insbesondere einen Freileitungsmast, mit mindestens einer Traverse (201) nach einem der vorstehenden Ansprüche und mindestens einer Stütze (202, 203) zu ihrer Befestigung, **dadurch gekennzeichnet, dass** die Stütze (202, 203) mit dem Verbundanker (206, 208) verschraubt ist.

8. Traversenanordnung nach Anspruch 6 oder 7, **gekennzeichnet durch** weitere in die Traverse (201) eingelassene Verbundanker (205, 207, 209) zur Befestigung von Isolatoren für Freileitungen.

9. Traversenanordnung nach dem Oberbegriff des Anspruchs 6 oder nach einem der Ansprüche 6 bis 8, **gekennzeichnet durch** Isolationsmittel, mit denen die Stütze gegenüber dem Mast und/oder der Traverse elektrisch isoliert ist.

10. Traversenanordnung nach einem der Ansprüche 6 bis 9, **gekennzeichnet durch** eine in den Anker eingesetzte Gewindebuchse aus einem isolierenden Werkstoff, in die ein Gewindebolzen zur Befestigung der Traverse an der Stütze eingeschraubt ist.

11. Traversenanordnung nach Anspruch 9 oder 10, **gekennzeichnet durch** eine an der Unterseite der Traverse befestigte und gegenüber der Traverse elektrisch isolierte Schiene (214), die eine in ihrer Längsrichtung variable Positionierung der Verschraubung für eine Stütze ermöglicht.

12. Traversenanordnung nach Anspruch 11, **dadurch gekennzeichnet, dass** die Schiene in eine Führung aus einem elektrisch isolierenden Werkstoff eingesetzt ist.

13. Traversenanordnung nach Anspruch 11 oder 12, **dadurch gekennzeichnet, dass** die Schiene (214) in einer an der Unterseite der Traverse vorgesehenen Ausnehmung sitzt.
